# EUROPEAN PATENT APPLICATION

(11) **EP 3 300 604 A1**
(43) Date of publication of application: **04.04.2018**
(21) Application number: 15890674.3
(22) Date of filing: 30.04.2015
(51) Int. Cl.: A22C 25/08, B65G 47/22

(54) **DEVICE FOR FEEDING FISH INTO COMPARTMENTS OF A FISH DRESSING MACHINE CONVEYOR**

(71) Applicant: Peruza, Sia, 2137 Rigas raj. (LV)
(72) Inventor: BORMANIS, Artis, LV-2137 Rigas raj. (LV)
(74) Representative: Osmans, Voldemars
(86) International application number: PCT/IB2015/053153
(87) International publication number: WO 2016/174502

(57) **Abstract**

A device for feeding fish into cells (4) of a conveyor (1) of a fish processing machine (2) comprises a conveyor (6) with a flat moving surface (7), and a guiding tunnel (11) which is open on the underside and has an entry (12), an exit (19) and two lateral walls (20). The guiding tunnel (11) is disposed above the flat moving surface (7) of the conveyor (6) such that the lower edges (21) of the lateral walls (20) of the tunnel (11) are close to the moving surface (7) of the conveyor (6) or are in contact therewith, and the entry (12) and the exit (19) of the guiding tunnel (11) are spaced apart in the direction of travel of the conveyor (6), wherein the guiding tunnel (11) is movable in a plane parallel to the moving surface (7) of the conveyor (6), and the device is provided with a drive which enables displacement of the exit (19) of the tunnel (11) in a transverse direction relative to the direction of travel of the moving surface (7) of the conveyor (6). Also proposed is a method for feeding in fish using the proposed device. The invention can be used in fish processing facilities for feeding fish into individual cells of a fish processing machine conveyor, for example during the processing of Baltic herring, capelin, sprats, Black Sea sprats, anchovies or brisling.

## Description

### Technical Field

The device refers to the fish processing industry, in particular, to devices that feed fish into cells of a fish processing machine conveyor.

### Background

During automated fish processing fish is fed to operative parts of a fish processing machine by means of a conveyor with individual cells wherein fish is placed with a specific orientation. Usually, the conveyor cells are filled in by an automatic device that fills in the moving conveyor cells successively with fish.

Patent US1416687, for example, describes a device that includes a conveyor with individual cells that are arranged perpendicularly to the conveyor's direction, a conveyor drive and a loading device that has a form of a tilted chute that narrows in its lower part. Fish is fed to the chute's wide upper end piece by piece and slides down the chute driven by gravity being oriented heads down during this sliding process to reach the conveyor's individual cells. The chute width in its lower part is approximately equal to a double lateral dimension of the cell. A disadvantage of this device is its low operational speed that is limited by the speed of fish sliding along the tilted plane, and impossibility to use it for feeding small-sized fish like sprats. Another disadvantage of this device is missing synchronization between fish fed to the cells and the proper cell movement that may result in the fish reaching the cell partially and its possible damage.

To load small-sized fish, more complicated devices are used, like the device described in patent US6026947 that contains a belt conveyor that moves parallel but in direction opposite to the movement of the cell conveyor, and a movable deflector. Fish moving along with the first conveyor and oriented along its direction bumps against the deflector that redirects fish into the cells of the second conveyor. Disadvantages of this device are, first, the deflector's strong mechanic impact on fish which is undesirable as it may result in decreasing the quality of the ready product. Second, the change in the fish movement direction results in stopping this fish movement in the longitudinal direction and, thus, in reduction of the interval between the redirected fish and the fish next to it. Consequently, a definite interval should be maintained between the fish moving with the first conveyor, for the device normal functioning.

The closest to the proposed solution is the device described in patent CA2172922 that contains a cell conveyor and a device feeding fish into the cells that is equipped with a U-shape guide channel. Wherein the conveyor belt forms the bottom surface of the guide channel along a part of the channel length. The conveyor belt is equipped with a number of periodically arranged studs. When the device is in operation a spring loaded catching device stops a fish at the guide channel entry and keeps it till the conveyor studs pick it up and release it from the resistance exerted by the catching device, to transfer it to the channel exit where the stud belt moves downwards, and the fish is released of the studs is moved by inertia to individual cells on the fish processing machine conveyor. The belt conveyor is equipped with an elliptical drive that provides the conveyor's acceleration upon catching fish and its deceleration before catching the next fish. A disadvantage of this device is, first, fish damage by the studs and the catching device which results in decreasing the quality of the ready product. Second, the necessity to stop fish at the beginning of the channel reduces the fish feed speed.

The object of the invention is to make a fish feed device where no fish stopping is required during the feed process, while reducing the degree of damage of the fish during the feed process, and to make such a device that will be fit to feed relatively small-sized fish.

### Summary of Invention

The technical result is achieved in the device for feeding fish to the cells of the fish processing machine conveyor, the device comprising a conveyor with a flat moving surface and a guiding tunnel that is open on the underside and has an entry, an exit and two lateral walls. Herein, the guiding tunnel is disposed above the flat moving surface of the conveyor in such a way that the lower edges of the tunnel lateral walls are close to the moving surface of the conveyor or contact herewith, the entry and exit of the guiding tunnel are spaced apart in the direction of travel of the conveyor, wherein the guiding tunnel is movable in a plane parallel to the moving surface of the conveyor, and the device is provided with a drive that enables displacement of the exit of the tunnel in a transverse direction to the direction relative to the direction of travel of the moving surface of the conveyor.

The device preferably comprises a fish passage sensor allowing registration of fish trapping into the cell of the fish processing machine conveyor. The fish passage sensor is a convenient way to register fish trapping into a conveyor cell, in order to shift the tunnel exit to the next unloaded conveyor cell. Such sensor may be conveniently attached in proximity of the exit of the guiding tunnel as the registration of fish passage through the tunnel exit may serve as an indicator of fish trapping into the conveyor cell.

To assure the tunnel exit shift, it is convenient to use a separate control unit connected to the fish passage sensor and the tunnel drive and configured to move the tunnel exit to the next cell of the fish processing machine conveyor upon a signal from the fish passage sensor. However, the control unit function may be performed by the computer of the fish processing machine or the common computer of the fish processing facility, for example.

It is preferable to use such a drive that provides for a stepwise shift of the tunnel exit to the next cell upon a signal from the fish passage sensor. A stepwise or quickest possible transfer of the exit between the cells will contribute to improve both reliability and operation speed of the device.

It is desirable that the conveyor's moving surface width is equal to at least three cell width dimensions, and preferably to five width dimensions of the cell of the fish processing machine conveyor.

Herein, the tunnel width is chosen based on the conveyor cell size and the size of the fed fish. It is desirable that the conveyor width is less than two fish width dimensions, preferably, less than one and a half width thereof. Such width will prevent simultaneous passage of two fish through the tunnel, and provide feeding fish one by one into the cells.

It is convenient that the tunnel length be at least three times or even better five times larger than its width. Such length appears to be sufficient to provide the tunnel exit transfers while preserving the tunnel entry in a relatively constant position. It is preferable to provide the tunnel with a ceiling or a lid to limit the tunnel height. Herein, it is desirable that the tunnel height is less than the fish width - the size between a fish belly to its back so that fish could only move flat wise (on its side) along the tunnel.

It is convenient to use a belt conveyor as a flat surface conveyor due to its relative simplicity and reliability.

There is provided also a method to feed fish into the cells of the fish processing machine conveyor using the device described above that includes the following steps:
a) feeding fish one-by-one, with heads oriented forward, to the entry of the guiding tunnel disposed over the moving surface running towards the fish processing machine conveyor;
b) positioning the tunnel exit against a selected cell;
c) transferring fish through the tunnel by the moving surface;
d) moving the tunnel exit synchronous with the movement of the selected cell till a fish is trapped in the cell; and
e) upon trapping the fish in the selected cell, transferring the tunnel exit to the next cell.

Thus, a smooth and steady fish feeding into the conveyor cells is achieved, with a decreased mechanical impact on fish from the feeding device. This method is suitable to feed virtually any fish, and it is especially advantageous in feeding small-sized fish like sprats or anchovy.

When using this method it is convenient to monitor fish loading to a cell with an electronic fish passage sensor. It is also desirable to exercise a quickest possible stepwise tunnel shift to the next cell.

### Brief Description of Drawings

Figure 1 presents the general view of the device.
Figure 2 presents the top view of the device.
Figure 3 presents the side view of the device.
Figure 4 presents the tunnel elevation view.
Figure 5 presents the device control scheme.

### Embodiment of the Invention

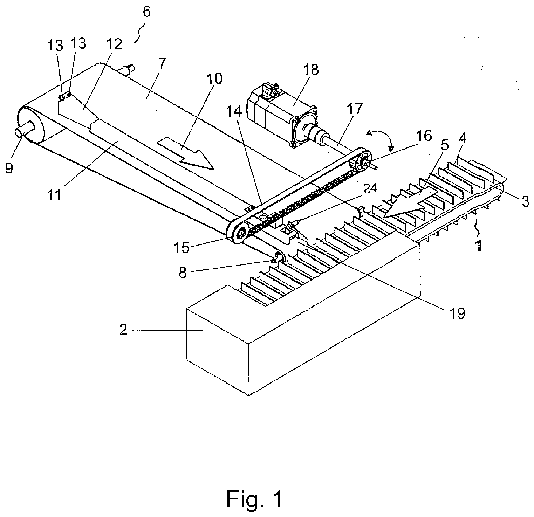

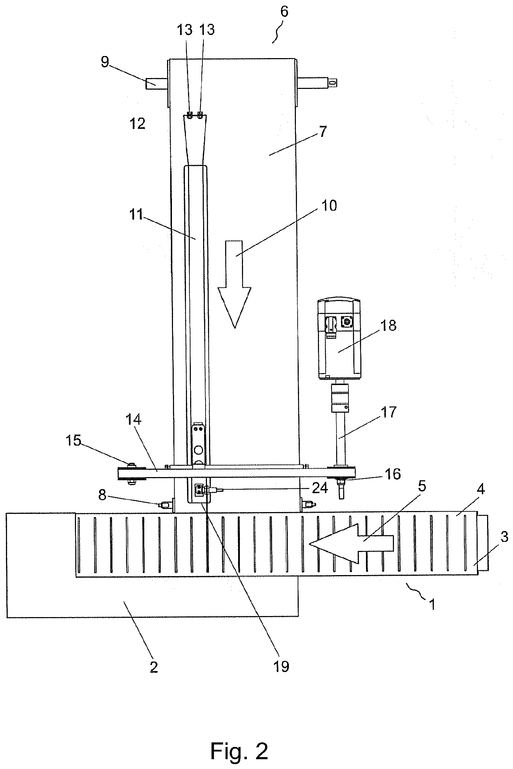

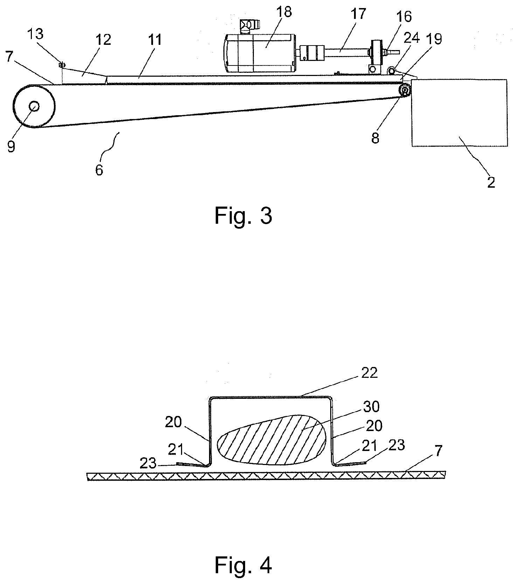

Fig. 1 presents the general view of the device for feeding fish into the cells of the fish processing machine conveyor in its operation state in the immediate vicinity of conveyor 1 of fish processing machine 2. Fig. 2 presents the top view of the device, and Fig. 3 presents the side view of the device. Conveyor 1 of fish processing machine 2 contains endless belt 3 with individual cells 4 arranged on it. The direction of conveyor 1 movement is indicated by arrow 5. The device for feeding fish into cells 4 of conveyor 1 on fish processing machine 2 contains conveyor 6 with flat moving surface 7. This embodiment of the device employs a belt conveyor where moving surface 7 is made by an elastic belt closed in a loop and tensioned on two pulleys 8 and 9. One of the pulleys, pulley 9, is connected to an electric motor that provides traction of moving surface 7 of conveyor 6 in the direction indicated by arrow 10. Guiding tunnel 11 is mounted over moving surface 7 of conveyor 6. Entry 12 and exit 19 of guiding tunnel 11 are spaced along the path of conveyor 6. Herein, guiding tunnel 11 is fixed on one side, close to exit 12, on two elastic suspensions 13, and is suspended on the other end on drive belt 14. Drive belt 14 is tensioned on two pulleys 15 and 16, one of them being connected to electric motor 8 by shaft 17.

Such suspension of guiding tunnel 11 provides a possibility to transfer exit 19 of guiding tunnel 11 over moving surface 7 of conveyor 6 in the plane parallel to surface 7. Changing the rotation direction of electric motor 18 provides the transfer of guiding tunnel 11 exit 19 both in the forward and backward direction along conveyor 1. Herein, lower edges 20 of lateral walls 21 either slide on moving surface 7 of conveyor 6 or are located close to the surface. The gap between lower edges 20 of lateral walls 21 and the surface is usually within 0 to 5 mm.

The dimensions of guiding tunnel 11 depend on the size of fish fed and are selected in such way as to provide that tunnel 11 freely holds one fish. Fig. 4 presents an enlarged elevation view of tunnel 11. It is preferable that fish is moved through tunnel 11 on their sides with heads forward. Herein, it is convenient to equip tunnel 11 with lid 22, and it is desirable to place lid 22 as low that to only allow fish moving through tunnel 11 in the position on side and prevent it turning to its back or belly. To assure tunnel 11 stability during operation, the lower edges of tunnel 11 are provided with additional support pads 23.

Fish passage sensor 24 is mounted at exit 19 of the tunnel. This embodiment of the device employs mechanical sensor 24 that is made as a flag mounted in such way that fish passing through tunnel exit 11 diverts the flag that closes the electric circuit while diverting. Upon the fish passage the flag returns to its initial position, and the circuit opens. It is understood that other devices may be used as a fish passage sensor. For instance, to register fish passing through tunnel exit 19 a photocell sensor may be used that triggers when the fish crosses a light beam, or a video camera with an image analyzer. The sensor may be mounted at tunnel exit 19, or over conveyor 1, or in another convenient location so that the sensor signal could provide an indication when current cell 4 of conveyor 11 is loaded.

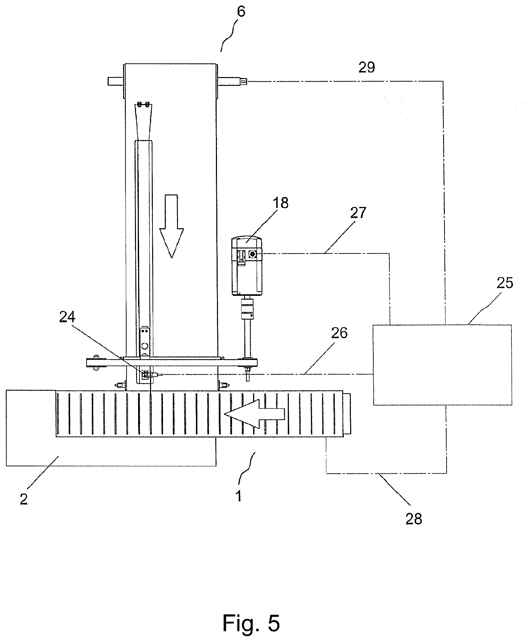

Sensor 24 is connected to an electronic control unit that supervises operation of the fish feeding device. Control unit 25 presented in Fig. 5 is connected to sensor 24 by signal line 26 and to electric motor 18 of guiding tunnel 11 drive by line 27. If an allocated computer is used as control unit 25 then control unit 25 is connected to conveyor 1 drive by line 28, or to another sensor that provides information on conveyor 1 movement. It is desirable to connect control unit 25 to the drive or sensors on conveyor 6 - by line 29. It is possible also to connect the device to an external control unit, for example, to the computer of fish processing machine 2.

The proposed device operates as follows. The device is installed before conveyor 1 of fish processing machine 2 so that exit 19 if tunnel 11 is located against cells 4 on conveyor 1, the longitudinal direction of tunnel 11 coincides approximately with the longitudinal direction of cells 4. During the device operation, conveyor 1 of fish processing machine 2 moves in the first direction indicated by arrow 5, and conveyor 6 moves transversally in the direction indicated by arrow 10. Fish, oriented with their heads forward are fed one by one to entry 19 of guiding tunnel 11. It is also advantageous to provide a uniform belly-back orientation of the fish fed to entry 19, to improve operation accuracy of the fish processing machine. Fish fed to entry 19 moves together with moving surface 7 of conveyor 6 and goes through guiding tunnel 11. Herein, the drive of guiding tunnel 11 provides a transfer of exit 19 in the direction of conveyor 2 movement so that exit 19 is permanently kept against one of cells 4. In other words, exit 19 of tunnel 11 follows or accompanies cell 4. Such accompanying continues till exit 19 reaches its extreme position or a fish is loaded into cell 4. Then exit 19 moves in the backward direction to the next cell 4 and continues to follow it. The drive of guiding tunnel 11 comprises electric motor 18, drive belt 14, driving shaft 17 and pulleys 15 and 16 the drive is arranged in the manner that provides exit 19 transfer in both forward and backward directions. It is desirable to make the drive in such a way as to carry out exit 19 backward transfer in a stepwise manner, and its forward transfer to be as smooth as possible.

Thus, when fish is fed to the conveyor cells fish is not decelerated during its transfer, it does not strike against obstacles, nor caught or over-pressed, and moves with a permanent speed. Because fish is nearly motionless on the conveyor moving surface during its transfer such device works well with virtually any fish, including small-sized fish.

### Industrial Applicability

The invention may be used at fish processing enterprises to feed fish into individual conveyor cells on a fish processing machine and may be used, for example, to process Baltic herrings, capelins, sardines, anchovies or sprats.

**Reference Numerals in Drawings**
- 1: fish processing machine conveyor
- 2: fish processing machine
- 3: belt
- 4: cell
- 5: conveyor movement direction
- 6: conveyor with a flat moving surface
- 7: moving surface
- 8: pulley
- 9: pulley
- 10: conveyor movement direction (direction of travel)
- 11: guiding tunnel
- 12: guiding tunnel entry
- 13: suspension
- 14: drive belt
- 15: pulley
- 16: pulley
- 17: shaft
- 18: electric motor
- 19: guiding tunnel exit
- 20: tunnel lateral wall
- 21: wall lower edge
- 22: tunnel ceiling
- 23: support pad
- 24: fish passage sensor
- 25: control unit
- 26: signal line
- 27: tunnel drive control line
- 28: signal line
- 29: control line
- 30: a fish

## Claims

1. A device for feeding fish into cells of a fish processing machine conveyor comprising:
a conveyor with a flat moving surface and
a guiding tunnel which is open on the underside and has an entry, an exit and two lateral walls, **characterised in that**
the guiding tunnel is disposed above the flat moving surface of the conveyor so that the lower edges of the tunnel lateral walls are close to the moving surface of the conveyor or are in contact herewith,
the entry and exit of the guiding tunnel are spaced apart in the direction of travel of the conveyor, and
the guiding tunnel is movable in a plane parallel to the moving surface of the conveyor,
wherein the device is provided with a drive that enables displacement of the exit of the tunnel in a transverse direction relative to the direction of travel of the moving surface of the conveyor.

2. The device according to claim 1, further comprising a fish passage sensor allowing registration of fish trapping in the cell of the fish processing machine conveyor.

3. The device according to claim 2, wherein the fish passage sensor is attached to the guiding tunnel in proximity to its exit.

4. The device according to claims 2 or 3, further comprising a control unit connected to the fish passage sensor and to the tunnel drive and configured to move the tunnel exit to the next cell of the fish processing machine conveyor upon a signal from the fish passage sensor.

5. The device according to claim 4 configured to move the tunnel exit stepwise to the next cell upon a signal from the fish passage sensor.

6. The device according to any of claims 1-5, wherein the width of the moving surface of the conveyor is equal to at least three cell width dimensions.

7. The device according to claim 6, wherein the width of the moving surface of the conveyor is equal to at least five cell width dimensions.

8. The device according to any of claims 1-7, wherein the width of the tunnel is less than double fish width.

9. The device according to claim 8, wherein the width of the tunnel is less than 1.5 fish width.

10. The device according to claim 1, wherein the length of the tunnel is at least five times larger than its width.

11. The device according to claim 1, wherein the tunnel has a ceiling limiting the tunnel height.

12. The device according to claim 11, wherein the tunnel height is less than the fish width.

13. The device according to claim 11, wherein the tunnel width and height are selected so that the fish is moving through the tunnel only flat wise.

14. The device according to any of claims 1-13, wherein the conveyor with a flat moving surface is a belt conveyor.

15. A method for feeding fish into cells of the fish processing machine conveyor using a device according to one of claims 1-14 comprising the following steps:
feeding fish one-by-one, with heads oriented forward, to the entry of the guiding tunnel disposed over the moving surface running towards the fish processing machine conveyor;
positioning the tunnel exit against a selected cell;
transferring fish through the tunnel by the moving surface;
moving the tunnel exit synchronous with the movement of the selected cell till a fish is trapped in the cell; and
upon trapping the fish in the selected cell, transferring the tunnel exit to the next cell.

16. The method according to claim 15, further comprising a step of monitoring fish trapping in the cell using an electronic fish passage sensor.

17. The method according to claim 16, wherein the transferring the tunnel to the next cell is carried out in a stepwise manner.
